(19) Europäisches Patentamt
European Patent Office
Office européen des brevets

(11) **EP 4 406 756 B1**

(12) **FASCICULE DE BREVET EUROPEEN**

(45) Date de publication et mention
de la délivrance du brevet:
**06.08.2025 Bulletin 2025/32**

(21) Numéro de dépôt: **24151178.1**

(22) Date de dépôt: **10.01.2024**

(51) Classification Internationale des Brevets (IPC):
***B60B 27/00*** *(2006.01)* ***F16C 19/18*** *(2006.01)*

(52) Classification Coopérative des Brevets (CPC):
**F16C 19/186; B60B 27/0005; B60B 27/0036;
B60B 27/0078; B60B 27/0094;** F16C 2326/02

(54) **ASSEMBLAGE DE ROUE DE VEHICULE AUTOMOBILE**

RADANORDNUNG FÜR EIN KRAFTFAHRZEUG

MOTOR VEHICLE WHEEL ASSEMBLY

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **26.01.2023 FR 2300717**

(43) Date de publication de la demande:
**31.07.2024 Bulletin 2024/31**

(73) Titulaire: **NTN Europe
74000 Annecy (FR)**

(72) Inventeurs:
• **BAUDU, Alexandre
74010 Annecy Cedex (FR)**
• **POURROY-SOLARI, Vincent
74230 THONES (FR)**

(74) Mandataire: **Alatis
3, rue Paul Escudier
75009 Paris (FR)**

(56) Documents cités:
**WO-A1-2021/148676 WO-A1-2022/161734
FR-A1- 3 112 825**

Description

DOMAINE TECHNIQUE DE L'INVENTION

L'invention se rapporte à un assemblage de roue de véhicule automobile.

ETAT DE LA TECHNIQUE ANTERIEURE

Un assemblage de roue motrice de véhicule automobile, une fois monté sur le véhicule, comporte généralement un sous-ensemble fixe destiné à être solidarisé à un élément de suspension du véhicule et comportant un premier chemin de roulement extérieur et un deuxième chemin de roulement extérieur définissant un axe de révolution; un sous-ensemble tournant, apte à tourner par rapport à l'organe fixe autour de l'axe de révolution, et comportant un moyeu de roue, un bol de transmission, un premier chemin de roulement intérieur situé en regard du premier chemin de roulement extérieur, un deuxième chemin de roulement intérieur situé en regard du deuxième chemin de roulement extérieur ; et des corps roulants, formant une première rangée de corps roulants entre le premier chemin de roulement extérieur et le premier chemin de roulement intérieur et une deuxième rangée de corps roulants entre le deuxième chemin de roulement extérieur et le deuxième chemin de roulement intérieur. Le moyeu de roue présente une interface de fixation pour une jante de roue et un disque de frein. L'assemblage présente donc classiquement un empilage de fonctions techniques, disposées suivant l'axe de révolution depuis l'intérieur vers l'extérieur du véhicule : transmission du couple, solidarisation à la suspension du véhicule, guidage en rotation, freinage et roulage, ce qui nécessite un encombrement important en sens axial, c'est-à-dire transversal dans le référentiel du véhicule.

Il a été proposé dans le document FR 3 052 104 de fretter sur le bol de transmission une bague intérieure de roulement pour le deuxième chemin de roulement intérieur, ce qui permet de diminuer l'encombrement axial pour une distance donnée entre les deux rangées de corps roulants, tout en augmentant le diamètre primitif de la rangée de corps roulants située du côté intérieur du véhicule. Dans la mesure où la charge utile et la raideur en carrossage sont des fonctions croissantes de la distance entre les deux rangées de corps roulants et du diamètre primitif des rangées de corps roulants, cette architecture apporte une solution pour concilier un encombrement axial réduit et de bonnes performances en termes de charge utile et de raideur en carrossage.

Les groupes motopropulseurs électriques et hybrides des véhicules s'avèrent souvent plus encombrants que les groupes motopropulseurs thermiques dans le sens de la largeur du véhicule au niveau des roues motrices, ce qui conduit à un raccourcissement des arbres de transmission transversaux. Ce raccourcissement n'est pas souhaitable car il conduit à des angles plus importants dans les joints de transmissions. Dans ce contexte, toute mesure permettant d'augmenter, même faiblement, l'espace disponible pour les arbres de transmission transversaux, est souhaitable. Il existe donc un besoin accru de compacité des assemblages de roue motrice en sens axial, qui ne se fasse pas au détriment des performances, notamment au niveau de la charge utile et de la rigidité.

À cet effet, il a été proposé dans les documents WO2021/148676 et WO2022/161734 un assemblage de roue motrice de véhicule automobile qui allie compacité axiale, charge utile élevée et bon niveau de raideur en carrossage, et comporte un sous-ensemble fixe comportant deux chemins de roulement extérieurs annulaires coaxiaux, un sous-ensemble tournant comportant un moyeu de roue sur lequel est formé un chemin de roulement intérieur, un bol de transmission et au moins une bague intérieure de roulement sur lequel est formé un deuxième chemin de roulement intérieur. Des corps roulants complètent l'assemblage et forment deux rangées de corps roulants distantes l'une de l'autre, roulant sur les chemins de roulement intérieurs et extérieurs pour guider en rotation le sous-ensemble tournant par rapport au sous-ensemble fixe. La bague intérieure est frettée sur le moyeu de roue et pincée axialement en appui contre un épaulement formé sur le moyeu de roue et un épaulement formé sur le bol de transmission. L'épaulement d'appui de la bague intérieure sur le moyeu de roue est positionné à proximité directe du fond de chemin du chemin de roulement intérieur formé sur moyeu de roue. Ce positionnement, qui contribue à la compacité axiale, impose une surface de contact axiale relativement faible entre l'épaulement d'appui de la bague intérieure et le moyeu de roue. La tension qui est installée dans l'assemblage du bol de transmission, du moyeu de roue et de la bague intérieure induit une pression de contact à l'interface élevée, ce qui augmente les risques de corrosion de contact et/ou d'abrasion. Il en résulte un risque, à l'usage, d'exposer le chemin de roulement intérieur formé sur le moyeu de roue aux particules métalliques générée à l'interface entre l'épaulement et la bague intérieure, risque d'autant plus important que l'interface entre la bague intérieure de roulement et l'épaulement du moyeu de roue débouche directement au niveau du chemin de roulement intérieur formé sur le moyeu de roue. Cet assemblage peut donc dans certains cas d'usage être sujet à un endommagement susceptible de limiter sa durée de vie.

EXPOSE DE L'INVENTION

L'invention vise à proposer une architecture d'assemblage de roue motrice de véhicule automobile, qui allie compacité axiale, charge utile élevée et bon niveau de raideur en carrossage, tout en limitant les risques de pollution de l'un des roulements par la corrosion de contact et/ou d'abrasion.

Pour ce faire est proposé, selon un premier aspect de l'invention, un assemblage de roue motrice de véhicule automobile , comportant :

- un sous-ensemble fixe comportant un premier chemin de roulement extérieur annulaire et un deuxième chemin de roulement extérieur annulaire centrés sur un axe de révolution commun ;

- un sous-ensemble tournant, apte à tourner par rapport au sous-ensemble fixe autour de l'axe de révolution, et comportant un moyeu de roue comportant un flasque pourvu d'une interface de fixation d'une jante de roue ou d'un disque de frein, le flasque de fixation formant une face de montage de la jante de roue ou du disque de frein tournée axialement dans un sens de démontage de la jante de roue ou du disque de frein, le sens de démontage étant parallèle à l'axe de révolution, un bol de transmission, et au moins une bague intérieure de roulement, la bague intérieure de roulement étant frettée sur une portée de frettage du moyeu de roue, la bague intérieure de roulement présentant une face de contact tournée axialement à l'opposé du sens du démontage, en appui contre le bol de transmission au niveau d'une interface de contact annulaire, la bague intérieure de roulement présentant une face d'extrémité tournée axialement dans le sens de démontage, en appui contre un épaulement du moyeu de roue suivant une interface d'appui ayant une circonférence extérieure ayant un diamètre DCE, le sous-ensemble tournant comportant en outre un premier chemin de roulement intérieur situé en regard du premier chemin de roulement extérieur et un deuxième chemin de roulement intérieur situé en regard du deuxième chemin de roulement extérieur et formé sur la bague intérieure de roulement ; et

- des billes, formant une première rangée de billes ayant un diamètre de bille DB1 et aptes à rouler sur le premier chemin de roulement extérieur et le premier chemin de roulement intérieur et une deuxième rangée de billes ayant un diamètre de bille DB2 et aptes à rouler sur le deuxième chemin de roulement extérieur et le deuxième chemin de roulement intérieur, les centres des billes de la première rangée de billes étant situés sur un cercle primitif de diamètre DP1 situé dans un premier plan primitif, les centres des billes de la deuxième rangée de billes étant situés sur un cercle primitif de diamètre DP2 situé dans un deuxième plan primitif, le premier plan primitif étant situé à une distance L non nulle du deuxième plan primitif dans le sens de démontage, la face d'extrémité étant située axialement entre le premier plan primitif et le deuxième plan primitif ;

Selon l'invention, la face d'extrémité de la bague de roulement intérieure est située à une distance du premier plan primitif supérieure à la moitié du diamètre de bille DB1 des billes de la première rangée de billes. De plus, l'inégalité suivante est réalisée :

$$DP1 - \frac{8}{10}DB1 < DCE$$

De préférence :

$$DP1 - \frac{6}{10} \cdot DB1 \ < \ DCE$$

Le diamètre DCE est ici le plus grand diamètre constaté au contact effectif entre l'épaulement du moyeu de roue et la bague intérieure de roulement, et mesuré dans un plan perpendiculaire à l'axe de révolution.

Suivant l'invention, on propose de positionner l'interface entre la bague de roulement intérieure et l'épaulement du moyeu de roue à distance axiale du premier chemin de roulement intérieur et de rehausser l'épaulement par rapport au fond du premier chemin de roulement intérieur, de façon à limiter la pollution induite au niveau de la première rangée de billes et des premiers chemins de roulement intérieur et extérieur par une éventuelle corrosion de contact.

En pratique, le diamètre primitif DP2 de la deuxième rangée de billes est plus grand que le diamètre primitif DP1 de la première rangée de billes. De préférence,

$$DP1 + DB1 \leq DP2 - DB2$$

On peut alors prévoir que l'interface d'appui entre la bague intérieure de roulement et l'épaulement du moyeu de roue soit située radialement à l'intérieur de la deuxième rangée de billes. Ainsi, suivant un mode de réalisation :

$$DCE < DP2 - 2.DB2$$

De préférence :

$$DCE < DP1$$

Suivant un mode de réalisation, une ou plusieurs des consignes de dimensionnement suivantes sont respectées :

- la face d'extrémité de la bague de roulement intérieure est plus proche du deuxième plan primitif que du premier plan primitif ; et/ou

- la face d'extrémité de la bague de roulement intérieure est située à une distance du deuxième plan primitif inférieure à la moitié du diamètre de bille DB2 des billes de la deuxième rangée de billes.

Pour permettre une compacité axiale importante, les deux plans primitifs sont proches l'un de l'autre. De préférence, une ou plusieurs des inégalités suivantes sont observées :

$$L \geq \frac{DP2 - DP1}{2}$$

$$L \leq \frac{7}{5} \times \frac{DB1 + DB2}{2}$$

$$\sqrt{4 * L^2 + (DP2 - DP1)^2} - (DB1 + DB2) \geq \frac{2}{3} \times DB1$$

Pour conserver à la bague intérieure de roulement une raideur suffisante, on prévoit de préférence :

$$\frac{DB1 + DB2}{2} \leq L$$

Le positionnement de l'interface de contact de la bague intérieure de roulement avec le bol de transmission par rapport à l'interface d'appui de la bague intérieure de roulement avec l'épaulement du moyeu de roue et par rapport aux chemins de roulement intérieur est choisi de manière à uniformiser les contraintes dans la bague intérieure de roulement. À cet effet, on peut prévoir une ou plusieurs des dispositions suivantes :

- l'interface de contact annulaire entre la bague de roulement intérieure et le bol de transmission est située au moins partiellement, et de préférence intégralement, d'un côté du deuxième plan primitif opposé au premier plan primitif ; et/ou

- en projection orthogonale sur l'axe de révolution, au moins une partie de l'interface de contact annulaire entre la bague de roulement intérieure et le bol de transmission est positionnée à une distance de l'interface d'appui entre la bague de roulement intérieure et l'épaulement, qui est inférieure au diamètre de bille DB2 des billes de la deuxième rangée de billes et/ou

- en projection orthogonale sur l'axe de révolution, au moins une partie de l'interface de contact annulaire entre la bague de roulement intérieure et le bol de transmission est positionnée à une distance de l'interface d'appui entre la bague de roulement intérieure et l'épaulement, qui est supérieure au diamètre de bille DB2 des billes de la deuxième rangée de billes et/ou

- au moins une partie de l'interface de contact annulaire entre la bague de roulement intérieure et le bol de transmission est située à une distance du deuxième plan primitif supérieure à la moitié du diamètre de bille DB2 des billes de la deuxième rangée de billes ; et/ou

- en projection orthogonale sur le premier plan primitif, au moins une partie de l'interface de contact annulaire entre la bague de roulement intérieure et le bol de transmission est superposée avec au moins une partie de l'interface d'appui entre la face d'extrémité de la bague de roulement intérieure et l'épaulement ; et/ou

- en projection orthogonale sur le premier plan primitif, au moins une partie de l'interface de contact annulaire entre la bague de roulement intérieure et le bol de transmission est située entre le deuxième chemin de roulement intérieur et la circonférence extérieure de l'interface d'appui entre la face d'extrémité de la bague de roulement intérieure et l'épaulement ; et/ou

- en projection orthogonale sur le premier plan primitif, l'interface de contact annulaire entre la bague de roulement intérieure et le bol de transmission et le deuxième chemin de roulement intérieur sont disjoints.

- en projection orthogonale sur le premier plan primitif, l'interface de contact annulaire entre la bague de roulement intérieure et le bol de transmission et le deuxième chemin de roulement intérieur sont à une distance l'un de l'autre supérieure à la moitié du diamètre de billes DB2.

Suivant un mode de réalisation, le bol de transmission comporte une portion d'extrémité cannelée montée libre, ajustée ou frettée dans une portion tubulaire cannelée du moyeu de roue, formant une interface de contact cannelée, le sous-ensemble tournant comportant de préférence au moins un élément de maintien axial fixé au bol de transmission et venant directement ou indirectement en appui contre une surface de butée du moyeu de roue tourné axialement dans le sens de démontage. De préférence, l'interface de contact cannelée permet un démontage non destructif du moyeu de roue. L'élément de maintien axial peut notamment être constitué d'une tête d'une vis vissée dans un trou fileté formé dans le bol de transmission parallèlement à l'axe de révolution, ou d'un écrou vissé sur une portion filetée formée sur le bol transmission. Il peut également s'agir d'une déformation à froid d'une extrémité du bol de transmission ou du moyeu de roue, assurant une interférence axiale entre les deux pièces. De façon plus générale, la portion d'extrémité du bol de transmission peut avoir toute forme cylindrique à base non circulaire montée libre, ajustée ou frettée dans une portion tubulaire de forme complémentaire du moyeu de roue, formant une interface de contact à section non circulaire, le sous-ensemble tournant comportant de préférence au moins un élément de maintien axial fixé au bol de transmission et venant directement ou indirectement en appui contre une surface de butée du moyeu de roue tourné axialement dans le sens de démontage. De préférence, une partie de la portion tubulaire cannelée du moyeu de roue est entourée par une partie au moins du premier chemin de roulement intérieur. De préférence, une partie de la portion tubulaire cannelée du moyeu de roue est entourée par le flasque de fixation.

Suivant un mode de réalisation le bol de transmission présente une portée cylindrique montée ajustée dans un alésage cylindrique du moyeu de roue, et située au moins partiellement entre le premier plan primitif et le deuxième plan primitif, et ayant de préférence une intersection avec un plan perpendiculaire à l'axe de révolution et tangent à l'épaulement. Le montage ajusté peut être mis à contribution pour reprendre une partie des efforts radiaux transmis au niveau du frettage entre la bague intérieure de roulement et le moyeu de roue.

La portée de frettage du moyeu de roue a vocation à reprendre les efforts radiaux exercés sur la bague de roulement. De préférence :

- la portée de frettage du moyeu de roue s'étend au moins partiellement entre le premier plan primitif et le deuxième plan primitif; et/ou

- la portée de frettage du moyeu de roue s'étend partiellement d'un côté du deuxième plan primitif opposé au premier plan primitif ; et/ou

- la portée de frettage du moyeu de roue présente un diamètre DF tel que :

$$DF < DP1 - \frac{10}{14} \cdot DB1;$$

et/ou

- la portée de frettage du moyeu de roue présente un diamètre DF tel que :

$$DP1 - \frac{6}{5}DB1 < DF$$

La borne inférieure du diamètre DF proposée ci-dessus traduit le souhait d'avoir un grand diamètre de frettage, ce qui est favorable en termes de compacité axiale.

Suivant un mode de réalisation, l'interface d'appui entre la face d'appui et l'épaulement est plane. Suivant un autre mode de réalisation, l'interface de contact annulaire est évasée, de préférence tronconique.

De préférence, le moyeu de roue est une pièce massive monobloc, de préférence métallique ou bimatière , par exemple une combinaison acier/aluminium ou acier/matériau composite. Alternativement, le moyeu de roue comporte au moins une pièce massive monobloc formant le flasque et la portée de frettage, et une bague de roulement intérieure supplémentaire frettée sur la pièce massive, qui forme le premier chemin de roulement intérieur et l'épaulement.

En pratique, le premier chemin de roulement intérieur est enveloppant en direction axiale, au sens où il présente un fond de chemin, situé dans une position axiale intermédiaire entre les extrémités axiales du chemin de roulement.

De façon préférentielle, DB1>DB2. Dans la configuration envisagée, la diminution du diamètre des billes de la deuxième rangée permet de réduire le diamètre extérieur du sous-ensemble fixe, sans pour autant augmenter les contraintes en flexion sur la bague de roulement, et sans perte de capacité, car en pratique, le diamètre primitif DP1 de la première rangée de billes est plus faible que le diamètre primitif DP2 de la deuxième rangée de billes, de sorte que le nombre de billes de la deuxième rangée est plus élevé que le nombre de billes de la première rangée. En pratique, la durée de vie de l'assemblage est déterminée principalement par la première rangée de billes.

En pratique, l'épaulement peut constituer un obstacle à l'insertion axiale d'éléments annulaires fermés de plus petit diamètre, tels que des joints d'étanchéité ou des cages de roulement. Suivant un mode de réalisation, on prévoit donc la première rangée de billes est guidée en rotation par une cage constituant un anneau ouvert élastiquement déformable, qui permet un montage de la cage de roulement en écartant la cage au passage de l'épaulement. Alternativement, on peut prévoir une cage de roulement de diamètre intérieur supérieur au diamètre DCE, qui peut alors être ouverte ou fermée.

La bague de roulement est de préférence une pièce métallique massive, réalisée par exemple en acier.

En pratique, l'assemblage de roue motrice comporte en outre une noix de transmission et des corps roulants de transmission, les corps roulants de transmission étant guidés par des pistes de roulement formées dans une cavité du bol de transmission et sur la noix de transmission. Les corps roulants de transmission et le bol de transmission forment un joint de transmission.

Suivant un mode de réalisation, le moyeu de roue comporte en outre une portée de centrage du disque de frein ou de la jante de roue, tournée radialement à l'opposé de l'axe de révolution et qui fait saillie axialement par rapport à la face de montage dans la direction de démontage. La portée de centrage peut par exemple être cylindrique, ou comporter deux portions cylindriques de diamètres différents, la portion la plus proche de la face de montage ayant de préférence un diamètre plus grand que la portion la plus éloignée, et ayant pour fonction le centrage du disque de frein. D'autres profils de la portée de centrage peuvent être envisagés. La portée de centrage peut également être discontinue, comporter des gorges annulaires ou des cannelures parallèles à l'axe de révolution.

La face de montage du flasque peut être plane ou comporter des stries, cannelures ou gorges, par exemple radiales, annulaires ou spirales, et / ou des orifices de montage, d'allègement, ou d'évacuation.

Le cas échéant, le sous-ensemble tournant comporte en outre un disque de frein en appui sur la face de montage, une jante de roue en appui sur le disque de frein et des éléments de fixation de la jante de roue et du disque de frein au flasque de fixation.

Suivant un mode de réalisation, les billes de la première rangée de billes ont des points de contact avec le premier chemin de roulement intérieur et le premier chemin de roulement extérieur, qui sont situés sur un premier cône de contact ayant un premier sommet situé par rapport à la première rangée de billes, à l'opposé de la deuxième rangée de billes, et les billes de la deuxième rangée de billes ont des points de contact avec le deuxième chemin de roulement intérieur et le deuxième chemin de roulement extérieur, qui sont situés sur un deuxième cône de contact ayant un deuxième sommet situé par rapport à la deuxième rangée de billes, à l'opposé de la première rangée de billes.

En pratique, le sous-ensemble fixe peut comporter une bride de fixation s'étendant radialement vers l'extérieur par rapport au premier chemin de roulement extérieur et au deuxième chemin de roulement extérieur. La bride de fixation est destinée à la fixation du sous-ensemble fixe à un organe de suspension du véhicule. À cet effet, la bride de fixation est de préférence pourvue d'une interface de fixation, qui peut comporter des alésages pour des éléments de fixation à l'organe de suspension.

Les chemins extérieurs de roulement sont de préférence enveloppants en direction axiale, au sens où ils présentent chacun un fond de chemin, situé dans une position axiale intermédiaire entre les extrémités axiales du chemin de roulement.

Suivant un mode de réalisation, le sous-ensemble fixe comporte une bague extérieure métallique massive monobloc formant le premier chemin de roulement extérieur et le deuxième chemin de roulement extérieur, et formant de préférence également la bride de fixation. Alternativement, on peut prévoir que l'un et/ou l'autre des chemins extérieurs de roulement soient réalisés dans une bague de roulement frettée dans un manchon formant la bride de fixation.

De préférence, le bol de transmission est une pièce métallique massive monobloc.

L'invention a également trait à un procédé de montage de l'assemblage précédemment décrit, suivant lequel 'avant frettage de la bague intérieure de roulement sur le moyeu de roue, on positionne une cage de roulement constituant un anneau ouvert, élastiquement déformable, en regard du premier chemin de roulement intérieur, en écartant la cage de roulement au passage de l'épaulement du sous-ensemble mobile, et on positionne les billes de la première rangée de billes dans des alvéoles de la cage de roulement, soit avant de positionner la cage de roulement, soit après avoir positionné la cage de roulement.

## BREVE DESCRIPTION DES FIGURES

D'autres caractéristiques et avantages de l'invention ressortiront à la lecture de la description qui suit, en référence aux figures annexées.

[Fig. 1] La figure 1 est une vue en coupe longitudinale d'un assemblage de roue motrice de véhicule automobile selon un premier mode de réalisation de l'invention.

[Fig. 2] La figure 2 illustre une étape de montage d'un assemblage selon la figure 1.

Pour plus de clarté, les éléments identiques ou similaires sont repérés par des signes de référence identiques sur l'ensemble des figures.

## DESCRIPTION DÉTAILLÉE DE MODES DE REALISATION

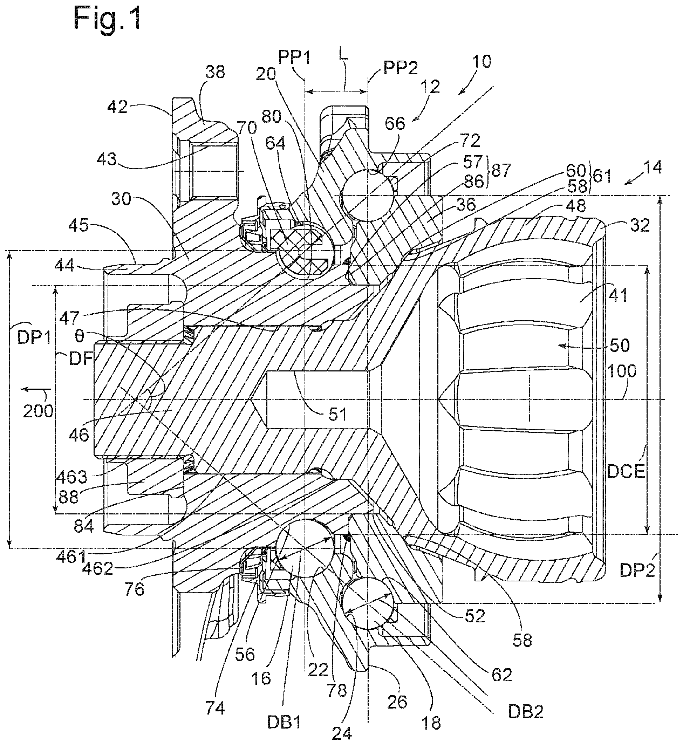

Sur la figure **1** est illustré un assemblage de roue motrice de véhicule automobile **10,** comportant un sous-ensemble fixe **12,** destiné à être solidarisé à un organe de suspension d'un véhicule automobile (non représenté) et définissant un axe de révolution **100,** un sous-ensemble tournant **14,** apte à tourner autour de l'axe de révolution **100** à l'intérieur du sous-ensemble fixe **12,** et des billes de guidage **16, 18** entre le sous-ensemble tournant **14** et le sous-ensemble fixe **12.**

Le sous-ensemble fixe **12** est ici constitué par une bague extérieure métallique massive monobloc **20** sur laquelle sont formés un premier chemin de roulement extérieur **22** et un deuxième chemin de roulement extérieur **24** coaxiaux définissant l'axe de révolution **100.** La bague extérieure comporte en outre au moins une bride de fixation **26** s'étendant radialement vers l'extérieur, dans laquelle sont formés des alésages (non illustrés sur cette figure) pour la fixation de la bride de fixation **26** à un organe de suspension, par l'intermédiaire d'éléments de fixation (non représentés).

Le sous-ensemble tournant **14** comporte un moyeu de roue **30,** un bol de transmission **32,** et une bague intérieure de roulement **36.**

Le moyeu de roue **30** est de préférence une pièce métallique massive monobloc, qui comporte un flasque **38** de fixation d'une jante de roue motrice et d'un disque de frein. Le flasque **38** présente une face **42** d'appui du disque de frein, et est pourvu d'alésages de fixation **43,** permettant l'insertion d'éléments de fixation de la jante et du disque de frein.

Le moyeu de roue **30** présente en outre une jupe **44** de centrage qui fait saillie axialement par rapport à la face plane d'appui **42,** dans un sens de démontage **200** de la jante de roue et du disque de frein, et présente une portée de centrage **45,** de préférence étagée, tournée radialement vers l'extérieur, comportant une première portion cylindrique de centrage de la jante de roue et une deuxième portion cylindrique, de diamètre égal ou plus important, pour le centrage du disque de frein lors du montage. La portée de centrage **45** est facultative et n'a pas nécessairement vocation à rester en contact avec la jante et le disque de frein après montage.

Le bol de transmission **32** est une pièce métallique massive monobloc, qui présente une portion saillante d'extrémité **46** pleine et une portion médiane évasée **48** délimitant une cavité **50** de joint homocinétique.

Dans ce mode de réalisation, la cavité **50** comporte des pistes de roulement **41** situées en regard de pistes de roulement complémentaires formées sur une noix de joint de transmission (non représenté), pour guider des corps roulants (non représentés) selon des trajectoires concaves, par exemple en arc de cercle, situées chacune dans un plan contenant l'axe de révolution **100.** De façon connue, cet ensemble forme un joint de transmission qui permet la transmission d'un mouvement et d'un couple entre la noix, solidaire d'un arbre de transmission, et le bol de transmission **32** solidaire du moyeu de roue **30,** alors qu'en fonctionnement, l'arbre de transmission ne reste pas parfaitement aligné avec l'axe de révolution **100** imposé par la bague extérieure **20,** étant rappelé que cette dernière est supportée par un élément de suspension assurant un ou plusieurs degrés de liberté de déplacement de la bague extérieure **20** par rapport à la caisse du véhicule.

La portion saillante **46** du bol de transmission **32** comporte une partie cannelée **461** et montée libre, ajustée ou frettée dans une cavité tubulaire cannelée **47** du moyeu de roue **30,** formant une interface de contact cannelée. Entre cette partie cannelée **461** et la portion médiane évasée **48,** la portion saillante **46** forme une portée cylindrique **462** montée ajustée ou avec un jeu incertain dans un alésage cylindrique **49** du moyeu de roue **30.**

Par ailleurs, on a illustré sur la figure **1** des moyens de fixation du bol de transmission **32** et du moyeu de roue **30,** qui mettent en œuvre un écrou **88** vissé à une extrémité filetée **463** de la portion saillante **46,** et en appui contre un épaulement d'extrémité **84** du moyeu de roue **30.**

Le cas échéant, la cavité **50** du bol de transmission **32** peut être prolongée par un alésage **51** optionnel s'étendant dans la portion saillante **46,** destiné à alléger l'assemblage et à diminuer la raideur axiale de la portion saillante **46,** pour notamment mieux maintenir la tension de serrage de l'écrou **88** dans le temps.

Un premier chemin de roulement intérieur **56** est formé sur le moyeu de roue **30** en regard du premier chemin de roulement extérieur **22.**

La bague intérieure de roulement **36** est frettée sur une portée de frettage cylindrique **52** du moyeu de roue **30,** avec une face transversale d'extrémité **57** plane en appui axial contre un épaulement **86,** également plan, du moyeu de roue **30,** formant une interface d'appui **87.** À l'opposé de cette face transversale d'extrémité **57,** la bague de roulement présente une face transversale annulaire d'arrêt **58** tournée axialement à l'opposé du premier chemin de roulement intérieur **56,** et axialement en saillie par rapport au moyeu de roue **30,** de façon à venir en appui contre un épaulement **60** formé sur le bol de transmission **32,** formant une interface de contact **61.** Dans ce mode de réalisation, la face transversale annulaire d'arrêt **58** et l'épaulement **60** sont tronconiques, mais ils peuvent, en variante, être plans. Un deuxième chemin de roulement intérieur **62** est formé sur la bague intérieure de roulement **36** en regard du deuxième chemin de roulement extérieur **24.** Les billes **16, 18** forment d'une part une première rangée de billes **16** qui roulent sur le premier chemin de roulement extérieur **22** et le premier chemin de roulement intérieur **56,** et d'autre part une deuxième rangée de billes **18** qui roulent sur le deuxième chemin de roulement extérieur **24** et le deuxième chemin de roulement intérieur **62.** Une première cage de roulement **70** assure le guidage des billes **16** de la première rangée de billes **16** et une deuxième cage de roulement **72** assure le guidage des billes **18** de la deuxième rangée de billes **18.** De façon connue, les cages de roulement délimitent des alvéoles pour loger les billes **16, 18** et éviter tout contact direct entre billes adjacentes d'une même rangée. Un joint d'étanchéité **74** est fretté sur la bague extérieure **20** du sous-ensemble fixe **12,** et vient en contact glissant avec un siège de joint **76** fretté sur le moyeu de roue **30.** Un filet de pâte d'étanchéité ou un joint statique **78** peut le cas échéant être positionné en appui sur le moyeu de roue **30** et sur la bague intérieure de roulement **36** au niveau du pourtour extérieur de l'interface entre l'épaulement **86** et la face d'appui **57.**

Pour la suite de l'exposé, on s'intéressera à certaines caractéristiques dimensionnelles remarquables de l'assemblage, illustrées sur la figure **1,** et qui nécessitent quelques définitions préalables. Ainsi, on notera :

- **PP1,** le plan primitif où se trouve le cercle primitif constituant la trajectoire des centres des billes **16** de la première rangée de billes (dit également dans la suite premier plan primitif) ;

- **PP2,** le plan primitif où se trouve le cercle primitif constituant la trajectoire des centres des billes **18** de la deuxième rangée de billes (dit également dans la suite deuxième plan primitif) ;

- **L**, la distance entre le premier plan primitif **PP1** et le deuxième plan primitif **PP2.**

- **DP1,** le diamètre du cercle primitif passant par les centres des billes **16** de la première rangée de billes **16 ;**

- **DP2,** le diamètre du cercle primitif passant par les centres des billes **18** de la deuxième rangée de billes **18 ;**

- **DB1,** le diamètre des billes **16** constituant les billes de la première rangée de billes ;

- **DB2,** le diamètre des billes **18** constituant les billes de la deuxième rangée de billes ;

- **DCE,** le diamètre de la circonférence extérieure de l'interface d'appui entre la face transversale d'extrémité **57** et l'épaulement **86.** En pratique, ce diamètre est égal au diamètre extérieur le plus petit parmi le diamètre extérieur de la face transversale d'extrémité **57** et celui de l'épaulement **86.**

- **DF,** le diamètre de la portée de frettage **52,** au niveau de la bague de roulement intérieure **36.**

Les chemins extérieurs de roulement **22, 24** formés sur la bague extérieure de roulement **20** sont enveloppants en direction axiale, au sens où ils présentent chacun un fond de chemin **64, 66,** situé dans une position intermédiaire entre les extrémités axiales du chemin de roulement correspondant **22, 24.** Les billes **16** de la première rangée de billes **16** sont de préférence plus grosses que les billes **18** de la deuxième rangée de billes **18,** et les chemins de roulement **22, 24, 56, 62** sont disposés de manière à constituer un roulement à deux rangées de billes à contact oblique du type dit en « O ». En d'autres termes, les points de contact entre les billes **16** de la première rangée et les chemins de roulement associés **22, 56** sont situés sur un premier cône de contact ayant un premier sommet situé, par rapport à la première rangée de billes **16,** à l'opposé de la deuxième rangée de billes **18,** alors que les points de contact entre les billes de la deuxième rangée **18** et les chemins de roulement associés **24, 62** sont situés sur un deuxième cône de contact ayant un deuxième sommet situé, par rapport à la deuxième rangée de billes **18,** à l'opposé de la première rangée de billes **16.**

On peut également observer le cône contenant le cercle primitif de la première rangée de billes **16** et le cercle primitif de la deuxième rangée de billes, dont l'angle d'ouverture $\theta$ est caractérisé par le rapport :

$$tg\left(\frac{\theta}{2}\right) = \frac{DP2 - DP1}{2\mathrm{L}}$$

En pratique, l'angle d'ouverture $\theta$ est compris entre 60° et 120°, ce qui se traduit par :

$$\frac{\sqrt{3}}{3} \leq \frac{DP2 - DP1}{2\mathrm{L}} \leq \sqrt{3}$$

En l'occurrence, l'angle d'ouverture $\theta$ est de préférence inférieur ou égal à 90°, pour une bonne compacité radiale de l'assemblage **10,** ce qui se traduit par :

$$\frac{DP2 - DP1}{2} \leq L$$

Par ailleurs, les deux plans primitifs **PP1** et **PP2** sont proches l'un de l'autre pour une bonne compacité axiale, sans toutefois que l'on observe un recouvrement axial entre les deux rangées de billes **16, 18** en projection sur un plan contenant l'axe de révolution **100** (par exemple le plan de la figure **1),** ce que l'on traduit par la double inégalité suivante :

$$\frac{DB1 + DB2}{2} \leq L \leq \frac{7}{5} \times \frac{DB1 + DB2}{2}$$

De manière préférentielle, on évite également un recouvrement des rangées de billes **16, 18** en projection dans un plan perpendiculaire à l'axe de révolution (par exemple le premier plan primitif **PP1),** ce qui se traduit par l'inégalité suivante :

$$DP1 + DB1 < DP2 - DB2$$

Pour éviter l'apparition de faiblesse structurelle, on assure une épaisseur de matière suffisante sous le chemin extérieur de la première rangée 66 par l'inégalité suivante :

$$\sqrt{4 \cdot L^2 + (DP2 - DP1)^2} - (DB1 + DB2) \geq \frac{2.DB1}{3}$$

De façon remarquable, la face d'extrémité **57** de la bague de roulement intérieure **36** est située axialement entre le premier plan primitif **PP1** et le deuxième plan primitif **PP2,** à une distance du premier plan primitif **PP1** supérieure à la moitié du diamètre de bille **DB1** des billes **16** de la première rangée de billes **16,** ce qui permet de limiter le risque de migration de polluants issus de la corrosion de contact entre la face d'extrémité **57** et l'épaulement **86.** De préférence, la face d'extrémité **57** est plus proche du deuxième plan primitif **PP2** que du premier plan primitif **PP1.** De préférence, la face d'extrémité **57** est située à une distance du deuxième plan primitif **PP2** inférieure à la moitié du diamètre de bille **DB2** des billes **18** de la deuxième rangée de billes **18.**

Par ailleurs, la circonférence extérieure de l'interface d'appui **87** entre la face d'extrémité **57** et l'épaulement **86** est plus éloignée de l'axe de révolution **100** que le fond de chemin **80** du premier chemin de roulement intérieur **56.** Cet éloignement en direction radiale permet de garantir une interface d'appui **87** suffisamment importante, de sorte à diminuer la pression à l'interface d'appui **87** et à limiter ainsi la corrosion de contact, tout en conservant une section de matière suffisamment importante sous le diamètre de frettage DF de la bague intérieure **36,** et par conséquent garantir la bonne résistance structurelle du moyeu **30.** En pratique, l'inégalité suivante est vérifiée :

$$DP1 - \frac{6}{10} \cdot DB1 \; < \; DCE$$

ou

$$DP1 - \frac{8}{10} \cdot DB1 \; < \; DCE$$

Pour permettre un montage aisé de la première rangée de billes **16,** la circonférence extérieure **DCE** de l'interface d'appui **87** entre la face d'extrémité 57 et l'épaulement **86** doit de préférence rester inférieure au diamètre primitif **DP1** de la première rangée de billes **16,** ce qui se traduit par l'inégalité :

$$DCE < DP1$$

De façon plus générale, pour garantir une raideur en flexion élevée à la bague de roulement intérieur **36,** on prévoit de préférence qu'en projection orthogonale sur un plan perpendiculaire à l'axe de révolution **100,** par exemple en projection orthogonale sur le plan **PP1,** il n'y ait pas de recouvrement entre la deuxième rangée de billes **18** et l'interface d'appui entre la face d'extrémité **57** et l'épaulement **86,** ce qui se traduit par l'inégalité :

$$DCE < \mathrm{DP2} - DB2$$

De préférence :

$$DCE < DP2 - 2 \cdot DB2$$

Le positionnement de l'interface de contact **61** de la bague intérieure **36** de roulement avec le bol de transmission **32** par rapport à l'interface d'appui **87** de la bague intérieure **36** de roulement avec l'épaulement **86** du moyeu de roue **30** et par rapport au chemin de roulement intérieur **62** de la bague intérieure **36** est choisi avec le souci, dans la mesure du possible, d'uniformiser les contraintes dans la bague intérieure de roulement **36.**

À cet effet, l'interface de contact annulaire **61** entre la bague de roulement intérieure **36** et le bol de transmission **32** est de préférence située au moins partiellement, et de préférence intégralement, d'un côté du deuxième plan primitif **PP2** opposé au premier plan primitif **PP1.** En projection orthogonale sur un plan contenant l'axe de révolution **100,** une autre partie de l'interface de contact annulaire **61** entre la bague de roulement intérieure **36** et le bol de transmission **32** est positionnée de préférence à une distance de l'interface d'appui entre la bague de roulement intérieure **36** et l'épaulement **86,** qui est supérieure au diamètre de bille **DB2** des billes de la deuxième rangée de billes **18.** Enfin, au moins une partie de l'interface de contact annulaire **61** entre la bague de roulement intérieure **36** et le bol de transmission **32** est située de préférence à une distance du deuxième plan primitif **PP2** supérieure à la moitié, et de préférence aux deux tiers, du diamètre de bille **DB2** des billes de la deuxième rangée de billes **18.**

Par ailleurs, observé en projection orthogonale sur le premier plan primitif **PP1,** au moins une partie de l'interface de contact annulaire **61** entre la bague de roulement intérieure **36** et le bol de transmission **32** est de préférence superposée avec au moins une partie de l'interface d'appui **87** entre la face d'extrémité **57** de la bague de roulement intérieure **36** et l'épaulement **86.** Toujours observé en projection orthogonale sur le premier plan primitif **PP1,** au moins une partie de l'interface de contact annulaire **61** entre la bague de roulement intérieure **36** et le bol de transmission **32** est de préférence située entre le deuxième chemin de roulement intérieur **62** et l'interface d'appui **87** entre la face d'extrémité **57** de la bague de roulement intérieure **36** et l'épaulement **86.** Enfin, vu en projection orthogonale sur le premier plan primitif **PP2,** le deuxième chemin de roulement intérieur **62** et l'interface de contact annulaire **61** entre la bague de roulement intérieure **36** et le bol de transmission **32** n'ont pas d'intersection.

La portée cylindrique **462** de la portion saillante **46** du bol de transmission **32** et l'alésage cylindrique **49** correspondant du moyeu de roue **30** sont situés au moins partiellement entre le premier plan primitif **PP1** et le deuxième plan primitif **PP2,** et ont de préférence une intersection avec un plan perpendiculaire à l'axe de révolution **100** et tangent à l'épaulement **86.** Avec ce positionnement, la portée cylindrique **462** peut participer à une limitation des déformations du moyeu de roue **30** au niveau de la portée de frettage **52.**

L'essentiel des efforts radiaux appliqués à la bague de roulement intérieure **36** est transféré à la portée de frettage **52** de moyeu de roue **30,** qui s'étend de préférence au moins partiellement entre le premier plan primitif **PP1** et le deuxième plan primitif **PP2.** Le cas échéant, la portée de frettage **52** du moyeu de roue **30** s'étend partiellement d'un côté du deuxième plan primitif **PP2** opposé au premier plan primitif **PP1.** De préférence, la portée de frettage **52** du moyeu de roue **30** est plus proche de l'axe de révolution **100** que le premier chemin de roulement intérieur **56,** ce que l'on traduit par l'inégalité :

$$DP1 - \frac{6}{5}DB1 < DF < DP1 - \frac{10}{14} \cdot DB1$$

De préférence :

$$DP1 - \frac{6}{5}DB1 < DF < DP1 - DB1$$

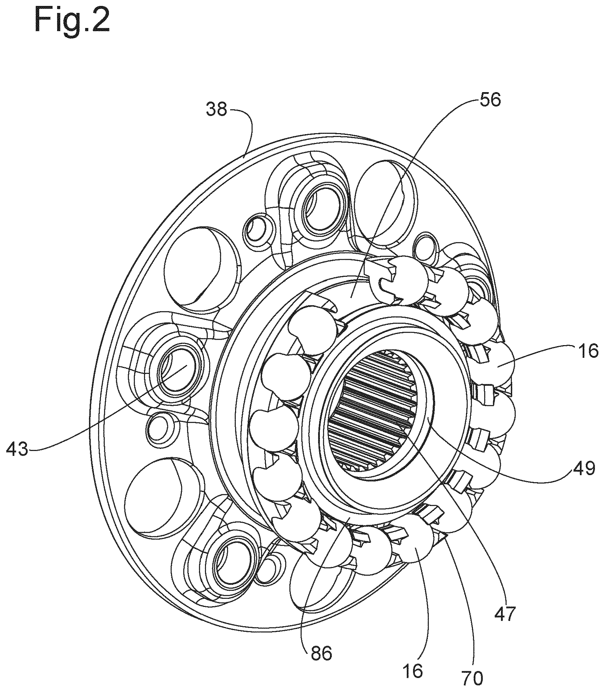

De façon remarquable, la première cage de roulement **70** est constituée d'un anneau ouvert, comme illustré sur la figure **2,** et est élastiquement déformable, pour permettre son passage au niveau de l'épaulement **86.** Lors du montage de l'assemblage **10,** on positionne la cage de roulement **70** en regard du premier chemin de roulement intérieur **56** en écartant la cage de roulement **70** au passage de l'épaulement **86** du sous-ensemble mobile comme illustré sur la figure **2,** et on positionne les billes **16** de la première rangée de billes **16** dans des alvéoles de la cage de roulement **70,** soit avant de positionner la cage de roulement **70,** soit après avoir positionné la cage de roulement **70,** le tout avant montage de la bague extérieure monobloc 20, et avant frettage de la bague intérieure de roulement **36** sur le moyeu de roue **30.**

Naturellement, les exemples représentés sur les figures et discutés ci-dessus ne sont donnés qu'à titre illustratif et non limitatif.

En variante du premier mode de réalisation, le moyeu de roue **30** peut être en deux pièces au moins, avec une pièce massive monobloc formant le flasque **38** et la portée de frettage **52,** et une bague de roulement intérieure supplémentaire frettée sur la pièce massive, qui forme le premier chemin de roulement intérieur **56** et l'épaulement **86.**

En autre variante, les billes **16, 18** des deux rangées de billes peuvent avoir le même diamètre, et l'une ou les deux rangées peuvent recevoir des rouleaux coniques en lieu et place des billes.

En variante, il est possible de prévoir un sous-ensemble fixe en plusieurs pièces, avec une bride **26** de fixation à un élément de suspension du véhicule, et deux bagues extérieures de roulement coaxiales frettées dans cette bride.

Le joint de transmission peut être un joint homocinétique de tout type adapté, notamment un type Rzeppa commandé par les pistes de roulement **41** mais d'autres variantes de joints homocinétiques sont possibles, par exemple des joints Rzeppa commandés par la cage du joint, ou des joints à pistes croisées. Ainsi, les pistes de roulement **41** ne sont pas nécessairement circulaires, ni même nécessairement concaves, des pistes rectilignes étant également envisageables.

Dans l'ensemble du texte de la présente demande, on a appelé sous-ensemble fixe un sous-ensemble qui constitue un référentiel fixe pour la rotation du sous-ensemble mobile. L'homme du métier aura compris que ce sous-ensemble est lui-même appelé à bouger par rapport à la caisse du véhicule, en fonction de la géométrie de suspension interposée entre la caisse du véhicule et le sous-ensemble fixe.

## Revendications

1. Assemblage de roue motrice (10) de véhicule automobile, comportant :

   - un sous-ensemble fixe (12) comportant un premier chemin de roulement extérieur annulaire (22) et un deuxième chemin de roulement extérieur annulaire (24) centrés sur un axe de révolution (100) commun ;
   - un sous-ensemble tournant (14), apte à tourner par rapport au sous-ensemble fixe (12) autour de l'axe de révolution (100), et comportant un moyeu de roue (30) comportant un flasque (38) pourvu d'une interface de fixation d'une jante de roue ou d'un disque de frein, le flasque de fixation (38) formant une face (42) de montage de la jante de roue ou du disque de frein tournée axialement dans un sens de démontage (200) de la jante de roue ou du disque de frein, le sens de démontage (200) étant parallèle à l'axe de révolution (100), un bol de transmission (32), et au moins une bague intérieure de roulement (36), la bague intérieure de roulement (36) étant frettée sur une portée de frettage (52) du moyeu de roue, la bague intérieure de roulement (36) présentant une face de contact tournée axialement à l'opposé du sens du démontage, en appui contre le bol de transmission (32) au niveau d'une interface de contact annulaire (61), la bague intérieure de roulement (36) présentant une face d'extrémité (57) tournée axialement dans le sens de démontage (200), en appui contre un épaulement (86) du moyeu de roue (30) suivant une interface d'appui (87) ayant une circonférence extérieure ayant un diamètre DCE, le sous-ensemble tournant (14) comportant en outre un premier chemin de roulement intérieur (56) situé en regard du premier chemin de roulement extérieur (22) et un deuxième chemin de roulement intérieur (62) situé en regard du deuxième chemin de roulement extérieur (24) et formé sur la bague intérieure de roulement (36) ; et
- des billes (16, 18), formant une première rangée de billes (16) ayant un diamètre de bille DB1 et aptes à rouler sur le premier chemin de roulement extérieur (22) et le premier chemin de roulement intérieur (56) et une deuxième rangée de billes (18) ayant un diamètre de bille DB2 et aptes à rouler sur le deuxième chemin de roulement extérieur (24) et le deuxième chemin de roulement intérieur (62), les centres des billes (16) de la première rangée de billes étant situés sur un cercle primitif de diamètre DP1 situé dans un premier plan primitif (PP1), les centres des billes (18) de la deuxième rangée de billes étant situés sur un cercle primitif de diamètre DP2 situé dans un deuxième plan primitif (PP2), le premier plan primitif (PP1) étant situé à une distance L non nulle du deuxième plan primitif (PP2) dans le sens de démontage (200), la face d'extrémité (57) étant située axialement entre le premier plan primitif (PP1) et le deuxième plan primitif (PP2) ;
**caractérisé en ce que** la face d'extrémité (57) de la bague de roulement intérieure (36) est située à une distance du premier plan primitif (PP1) supérieure à la moitié du diamètre de bille DB1 des billes (16) de la première rangée de billes (16) et **en ce que** :

$$DP1 - \frac{8}{10}DB1 < DCE$$

et, de préférence :

$$DP1 - \frac{6}{10} \cdot DB1 < DCE$$

2. Assemblage de roue motrice (10) selon la revendication 1, **caractérisé en ce que**

$$DCE < DP2 - 2.DB2$$

et, de préférence :

$$DCE < DP1$$

3. Assemblage de roue motrice (10) selon l'une quelconque des revendications précédentes, **caractérisé en ce que**

- la face d'extrémité (57) de la bague de roulement intérieure (36) est plus proche du deuxième plan primitif (PP2) que du premier plan primitif (PP1) ; et/ou
- la face d'extrémité (57) de la bague de roulement intérieure (36) est située à une distance du deuxième plan primitif (PP2) inférieure à la moitié du diamètre de bille DB2 des billes (18) de la deuxième rangée de billes (18).

4. Assemblage de roue motrice (10) selon l'une quelconque des revendications précédentes, **caractérisé en ce que** :

$$L \geq \frac{DP2 - DP1}{2}$$

et/ou

$$L \leq \frac{7}{5} \times \frac{DB1 + DB2}{2}$$

et/ou

$$\sqrt{4 * L^2 + (DP2 - DP1)^2} - (DB1 + DB2) \geq \frac{2}{3} \times DB1$$

5. Assemblage de roue motrice (10) selon l'une quelconque des revendications précédentes, **caractérisé en ce que** :

$$\frac{DB1 + DB2}{2} \le L$$

**6.** Assemblage de roue motrice (10) selon l'une quelconque des revendications précédentes, **caractérisé en ce que** :

- l'interface de contact annulaire (61) entre la bague de roulement intérieure (36) et le bol de transmission (32) est située au moins partiellement, et de préférence intégralement, d'un côté du deuxième plan primitif (PP2) opposé au premier plan primitif (PP1) ; et/ou

- en projection orthogonale sur l'axe de révolution (100), au moins une partie de l'interface de contact annulaire (61) entre la bague de roulement intérieure (36) et le bol de transmission (32) est positionnée à une distance de l'interface d'appui (87) entre la bague de roulement intérieure (36) et l'épaulement (86), qui est inférieure au diamètre de bille DB2 des billes de la deuxième rangée de billes (18) et/ou

- en projection orthogonale sur l'axe de révolution (100), au moins une partie de l'interface de contact annulaire (61) entre la bague de roulement intérieure (36) et le bol de transmission (32) est positionnée à une distance de l'interface d'appui (87) entre la bague de roulement intérieure (36) et l'épaulement (86), qui est supérieure au diamètre de bille DB2 des billes de la deuxième rangée de billes (18) et/ou

- au moins une partie de l'interface de contact annulaire (61) entre la bague de roulement intérieure (36) et le bol de transmission (32) est située à une distance du deuxième plan primitif (PP2) supérieure à la moitié du diamètre de bille DB2 des billes (18) de la deuxième rangée de billes (18) ; et/ou

- en projection orthogonale sur le premier plan primitif (PP1), au moins une partie de l'interface de contact annulaire (61) entre la bague de roulement intérieure (36) et le bol de transmission (32) est superposée avec au moins une partie de l'interface d'appui (87) entre la face d'extrémité (57) de la bague de roulement intérieure (36) et l'épaulement (86) ; et/ou

- en projection orthogonale sur le premier plan primitif (PP1), au moins une partie de l'interface de contact annulaire (61) entre la bague de roulement intérieure (36) et le bol de transmission (32) est située entre le deuxième chemin de roulement intérieur (62) et la circonférence extérieure de l'interface d'appui (87) entre la face d'extrémité (57) de la bague de roulement intérieure (36) et l'épaulement (86) ; et/ou

- en projection orthogonale sur le premier plan primitif (PP1), l'interface de contact annulaire (61) entre la bague de roulement intérieure (36) et le bol de transmission (32) et le deuxième chemin de roulement intérieur (62) sont disjoints.

- en projection orthogonale sur le premier plan primitif (PP1), l'interface de contact annulaire (61) entre la bague de roulement intérieure (36) et le bol de transmission (32) et le deuxième chemin de roulement intérieur (62) sont à une distance l'un de l'autre supérieure à la moitié du diamètre de billes DB2.

**7.** Assemblage de roue motrice (10) selon l'une quelconque des revendications précédentes, **caractérisé en ce que** le bol de transmission (32) présente une portée cylindrique (462) montée ajustée dans un alésage cylindrique (49) du moyeu de roue (30), et située au moins partiellement entre le premier plan primitif (PP1) et le deuxième plan primitif (PP2), et ayant de préférence une intersection avec un plan perpendiculaire à l'axe de révolution (100) et tangent à l'épaulement (86).

**8.** Assemblage de roue motrice (10) selon l'une quelconque des revendications précédentes, **caractérisé en ce que** :

- la portée de frettage (52) du moyeu de roue (30) s'étend au moins partiellement entre le premier plan primitif (PP1) et le deuxième plan primitif (PP2) ; et/ou

- la portée de frettage (52) du moyeu de roue (30) s'étend partiellement d'un côté du deuxième plan primitif (PP2) opposé au premier plan primitif (PP1) ; et/ou

- la portée de frettage (52) du moyeu de roue présente un diamètre DF tel que :

$$DF < DP1 - \frac{10}{14} \cdot DB1$$

et/ou

- la portée de frettage (52) du moyeu de roue présente un diamètre DF tel que :

$$DP1 - \frac{6}{5}DB1 < DF$$

9. Assemblage de roue motrice (10) selon l'une quelconque des revendications précédentes, **caractérisé en ce que** l'interface d'appui (87) entre la face d'appui (57) et l'épaulement (86) est plane.

10. Assemblage de roue motrice (10) selon l'une quelconque des revendications précédentes, **caractérisé en ce que**

   - le moyeu de roue (30) est une pièce massive monobloc, de préférence métallique ou bimatière ; ou
   - le moyeu de roue (30) comporte au moins une pièce massive monobloc formant le flasque (38) et la portée de frettage (52), et une bague de roulement intérieure supplémentaire frettée sur la pièce massive, qui forme le premier chemin de roulement intérieur (56) et l'épaulement (86).

11. Assemblage de roue motrice (10) selon l'une quelconque des revendications précédentes, **caractérisé en ce que** le premier chemin de roulement intérieur (56) est enveloppant en direction axiale.

12. Assemblage de roue motrice (10) selon l'une quelconque des revendications précédentes, **caractérisé en ce que** DB1>DB2.

13. Assemblage de roue motrice (10) selon l'une quelconque des revendications précédentes, **caractérisé en ce que** la première rangée de billes (16) est guidée en rotation par une cage (70) constituant un anneau ouvert élastiquement déformable.

14. Procédé de montage d'un assemblage de roue motrice selon l'une quelconque des revendications précédentes, **caractérisé en ce qu'**avant frettage de la bague intérieure de roulement (36) sur le moyeu de roue (30), on positionne une cage de roulement (70) constituant un anneau ouvert, élastiquement déformable, en regard du premier chemin de roulement intérieur (56), en écartant la cage de roulement (70) au passage de l'épaulement (86) du sous-ensemble mobile, et on positionne les billes (16) de la première rangée de billes (16) dans des alvéoles de la cage de roulement (70), soit avant de positionner la cage de roulement (70), soit après avoir positionné la cage de roulement (70).


**Patentansprüche**

1. Kraftfahrzeugantriebsradanordnung (10), umfassend:

   - eine feststehende Unterbaugruppe (12), die eine erste ringförmige äußere Laufbahn (22) und eine zweite ringförmige äußere Laufbahn (24) umfasst, die auf einer gemeinsamen Drehachse (100) zentriert sind;
   - eine rotierende Unterbaugruppe (14), die sich relativ zur feststehenden Unterbaugruppe (12) um die Drehachse (100) drehen kann und eine Radnabe (30) mit einem Flansch (38) aufweist, der mit einer Schnittstelle zum Befestigen einer Radfelge oder einer Bremsscheibe versehen ist, wobei der Befestigungsflansch (38) eine Fläche (42) zum Montieren der Radfelge oder der Bremsscheibe bildet, die axial in eine Demontagerichtung (200) der Radfelge oder der Bremsscheibe gedreht ist, wobei die Demontagerichtung (200) parallel zur Drehachse (100) ist, eine Getriebeschale (32) und mindestens einen inneren Laufring (36), wobei der innere Laufring (36) auf einen Schrumpfsitz (52) der Radnabe aufgeschrumpft ist, wobei der innere Laufring (36) eine Kontaktschnittstelle aufweist, die axial entgegen der Demontagerichtung gedreht ist und an der Getriebeschale (32) auf Höhe einer ringförmigen Kontaktschnittstelle (61) anliegt, wobei der innere Laufring (36) eine Stirnfläche (57) aufweist, die axial in die Demontagerichtung (200) gedreht ist und an einer Schulter (86) der Radnabe (30) entlang einer Auflageschnittstelle (87) anliegt, die einen Außenumfang mit einem Durchmesser DCE aufweist, wobei die rotierende Unterbaugruppe (14) ferner eine erste innere Laufbahn (56), die gegenüber der ersten äußeren Laufbahn (22) angeordnet ist, und eine zweite innere Laufbahn (62), die gegenüber der zweiten äußeren Laufbahn (24) angeordnet und am inneren Laufring (36) ausgebildet ist, umfasst; und
   - Kugeln (16, 18), die eine erste Kugelreihe (16) mit einem Kugeldurchmesser DB1 bilden, die auf der ersten äußeren Laufbahn (22) und der ersten inneren Laufbahn (56) rollen können, und eine zweite Kugelreihe (18) mit einem Kugeldurchmesser DB2 bilden, die auf der zweiten äußeren Laufbahn (24) und der zweiten inneren Laufbahn (62) rollen können, wobei die Mittelpunkte der Kugeln (16) der ersten Kugelreihe auf einem Teilkreis mit dem Durchmesser DP1 in einer ersten Teilebene (PP1) liegen, die Mittelpunkte der Kugeln (18) der zweiten Kugelreihe auf einem Teilkreis mit dem Durchmesser DP2 in einer zweiten Teilebene (PP2) liegen, die erste Teilebene (PP1) in Demontagerichtung (200) einen von Null verschiedenen Abstand L von der zweiten Teilebene (PP2) aufweist und die Stirnfläche (57) axial zwischen der ersten Teilebene (PP1) und der zweiten Teilebene (PP2) liegt;

**dadurch gekennzeichnet, dass** die Stirnfläche (57) des inneren Laufrings (36) sich in einem Abstand von der ersten Teilebene (PP1) befindet, der größer ist als die Hälfte des Kugeldurchmessers DB1 der Kugeln (16) der ersten Kugelreihe (16), und dadurch, dass:

$$DP1 - \frac{8}{10} DB1 < DCE$$

und vorzugsweise:

$$DP1 - \frac{6}{10} \cdot DB1 < DCE$$

2. Kraftfahrzeugantriebsradanordnung (10) nach Anspruch 1, **dadurch gekennzeichnet, dass**

$$DCE < DP2 - 2.DB2$$

und vorzugsweise:

$$DCE < DP1$$

3. Antriebsradanordnung (10) nach einem der vorstehenden Ansprüche, **dadurch gekennzeichnet, dass**

   - die Stirnfläche (57) des inneren Laufrings (36) näher an der zweiten Teilebene (PP2) liegt als an der ersten Teilebene (PP1); und/oder
   - die Stirnfläche (57) des inneren Laufrings (36) sich in einem Abstand von der zweiten Teilebene (PP2) befindet, der kleiner ist als die Hälfte des Kugeldurchmessers DB2 der Kugeln (18) der zweiten Kugelreihe (18).

4. Antriebsradanordnung (10) nach einem der vorstehenden Ansprüche, **dadurch gekennzeichnet, dass:**

$$L \geq \frac{DP2 - DP1}{2}$$

und/oder

$$L \leq \frac{7}{5} \times \frac{DB1 + DB2}{2}$$

und/oder

$$\sqrt{4 * L^2 + (DP2 - DP1)^2} - (DB1 + DB2) \geq \frac{2}{3} \times DB1$$

5. Antriebsradanordnung (10) nach einem der vorstehenden Ansprüche, **dadurch gekennzeichnet, dass:**

$$\frac{DB1 + DB2}{2} \leq L$$

6. Antriebsradanordnung (10) nach einem der vorstehenden Ansprüche, **dadurch gekennzeichnet, dass:**

   - die ringförmige Kontaktschnittstelle (61) zwischen dem inneren Laufring (36) und der Getriebeschale (32) sich zumindest teilweise und vorzugsweise vollständig auf einer Seite der zweiten Teilebene (PP2) gegenüber der ersten Teilebene (PP1) befindet; und/oder

- in orthogonaler Projektion auf die Drehachse (100) zumindest ein Teil der ringförmigen Kontaktschnittstelle (61) zwischen dem inneren Laufring (36) und der Getriebeschale (32) in einem Abstand von der Auflageschnittstelle (87) zwischen dem inneren Laufring (36) und der Schulter (86) positioniert ist, der kleiner ist als der Kugeldurchmesser DB2 der Kugeln der zweiten Kugelreihe (18) und/oder

- in orthogonaler Projektion auf die Drehachse (100) zumindest ein Teil der ringförmigen Kontaktschnittstelle (61) zwischen dem inneren Laufring (36) und der Getriebeschale (32) in einem Abstand von der Auflageschnittstelle (87) zwischen dem inneren Laufring (36) und der Schulter (86) positioniert ist, der größer ist als der Kugeldurchmesser DB2 der Kugeln der zweiten Kugelreihe (18) und/oder

- zumindest ein Teil der ringförmigen Kontaktschnittstelle (61) zwischen dem inneren Laufring (36) und der Getriebeschale (32) in einem Abstand von der zweiten Teilebene (PP2) angeordnet ist, der größer ist als die Hälfte des Kugeldurchmessers DB2 der Kugeln (18) der zweiten Kugelreihe (18); und/oder

- in orthogonaler Projektion auf die erste Teilebene (PP1) zumindest ein Teil der ringförmigen Kontaktschnittstelle (61) zwischen dem inneren Laufring (36) und der Getriebeschale (32) über zumindest einem Teil der Auflageschnittstelle (87) zwischen der Stirnfläche (57) des inneren Laufrings (36) und der Schulter (86) liegt; und/oder

- in orthogonaler Projektion auf die erste Teilebene (PP1) zumindest ein Teil der ringförmigen Kontaktschnittstelle (61) zwischen dem inneren Laufring (36) und der Getriebeschale (32) zwischen der zweiten inneren Laufbahn (62) und dem Außenumfang der Auflageschnittstelle (87) zwischen der Stirnfläche (57) des inneren Laufrings (36) und der Schulter (86) liegt; und/oder

- in orthogonaler Projektion auf die erste Teilebene (PP1) die ringförmige Kontaktschnittstelle (61) zwischen dem inneren Laufring (36) und der Getriebeschale (32) und die zweite innere Laufbahn (62) getrennt sind.

- in orthogonaler Projektion auf die erste Teilebene (PP1) die ringförmige Kontaktschnittstelle (61) zwischen dem inneren Laufring (36) und der Getriebeschale (32) und die zweite innere Laufbahn (62) einen Abstand voneinander aufweisen, der größer als die Hälfte des Kugeldurchmessers DB2 ist.

7. Antriebsradanordnung (10) nach einem der vorstehenden Ansprüche, **dadurch gekennzeichnet, dass** die Getriebeschale (32) eine zylindrische Auflagefläche (462) aufweist, die in eine zylindrische Bohrung (49) der Radnabe (30) eingepasst ist und sich zumindest teilweise zwischen der ersten Teilebene (PP1) und der zweiten Teilebene (PP2) befindet und vorzugsweise einen Schnittpunkt mit einer Ebene aufweist, die senkrecht zur Drehachse (100) und tangential zur Schulter (86) verläuft.

8. Antriebsradanordnung (10) nach einem der vorstehenden Ansprüche, **dadurch gekennzeichnet, dass:**

- der Schrumpfsitz (52) der Radnabe (30) sich zumindest teilweise zwischen der ersten Teilebene (PP1) und der zweiten Teilebene (PP2) erstreckt; und/oder
- der Schrumpfsitz (52) der Radnabe (30) sich teilweise auf einer Seite der zweiten Teilebene (PP2) gegenüber der ersten Teilebene (PP1) erstreckt; und/oder
- der Schrumpfsitz (52) der Radnabe einen Durchmesser DF aufweist, derart dass:

$$DF < DP1 - \frac{10}{14} \cdot DB1$$

und/oder
- der Schrumpfsitz (52) der Radnabe einen Durchmesser DF aufweist, so dass:

$$DP1 - \frac{6}{5} DB1 < DF$$

9. Antriebsradanordnung (10) nach einem der vorstehenden Ansprüche, **dadurch gekennzeichnet, dass** die Auflageschnittstelle (87) zwischen der Stirnfläche (57) und der Schulter (86) eben ist.

10. Antriebsradanordnung (10) nach einem der vorstehenden Ansprüche, **dadurch gekennzeichnet, dass**

- die Radnabe (30) ein massives einstückiges Teil ist, vorzugsweise aus Metall oder aus Zweikomponentenmaterial; oder
- die Radnabe (30) mindestens ein massives einstückiges Teil umfasst, das den Flansch (38) und den Schrumpf-

EP 4 406 756 B1

sitz (52) bildet, und einen zusätzlichen inneren Laufring, der auf das massive Teil aufgeschrumpft ist, das die erste innere Laufbahn (56) und die Schulter (86) bildet.

11. Antriebsradanordnung (10) nach einem der vorstehenden Ansprüche, **dadurch gekennzeichnet, dass** die erste innere Laufbahn (56) in axialer Richtung umhüllend ist.

12. Antriebsradanordnung (10) nach einem der vorstehenden Ansprüche, **dadurch gekennzeichnet, dass** DB1>DB2.

13. Antriebsradanordnung (10) nach einem der vorstehenden Ansprüche, **dadurch gekennzeichnet, dass** die erste Kugelreihe (16) durch einen Käfig (70), der einen offenen, elastisch verformbaren Ring bildet, drehbar geführt wird.

14. Verfahren zur Montage einer Antriebsradanordnung nach einem der vorstehenden Ansprüche, **dadurch gekennzeichnet, dass** vor dem Aufschrumpfen des inneren Lagerrings (36) auf die Radnabe (30) ein Lagerkäfig (70), der einen offenen, elastisch verformbaren Ring bildet, gegenüber der ersten inneren Laufbahn (56) positioniert wird, indem der Lagerkäfig (70) beim Passieren der Schulter (86) der beweglichen Unterbaugruppe auseinanderbewegt wird, und die Kugeln (16) der ersten Kugelreihe (16) entweder vor dem Positionieren des Lagerkäfigs (70) oder nachdem der Lagerkäfig (70) positioniert wurde, in Zellen des Lagerkäfigs (70) positioniert werden.

**Claims**

1. Motor vehicle drive wheel assembly (10), comprising:

    - a fixed sub-assembly (12) comprising a first annular outer raceway (22) and a second annular outer raceway (24) centered on a common axis of rotation (100);
    - a rotating sub-assembly (14), capable of rotating relative to the fixed sub-assembly (12) about the axis of rotation (100), and comprising a wheel hub (30) comprising a flange (38) which is provided with an interface for attaching a wheel rim or a brake disc, the attachment flange (38) forming a face (42) for mounting the wheel rim or the brake disc, which axially faces in a direction (200) of disassembly of the wheel rim or of the brake disc, the direction (200) of disassembly being parallel to the axis of rotation (100), a transmission bowl (32), and at least one inner rolling bearing ring (36), the inner rolling bearing ring (36) being shrink-fitted onto a shrink-fit bearing surface (52) of the wheel hub, the inner rolling bearing ring (36) having a contact face axially facing in the opposite direction to the direction of disassembly, bearing against the transmission bowl (32) at an annular contact interface (61), the inner rolling bearing ring (36) having an end face (57) axially facing in the direction (200) of disassembly, bearing against a shoulder (86) of the wheel hub (30) along a bearing interface (87) having an outer circumference with a diameter DCE, the rotating sub-assembly (14) further comprising a first inner raceway (56) located opposite the first outer raceway (22) and a second inner raceway (62) located opposite the second outer raceway (24) and formed on the inner rolling bearing ring (36); and
    - balls (16, 18), forming a first row of balls (16) having a ball diameter DB1 and capable of rolling on the first outer raceway (22) and the first inner raceway (56) and a second row of balls (18) having a ball diameter DB2 and capable of rolling on the second outer raceway (24) and the second inner raceway (62), the centers of the balls (16) of the first row of balls being located on a pitch circle of diameter DP1 located in a first pitch plane (PP1), the centers of the balls (18) of the second row of balls being located on a pitch circle of diameter DP2 located in a second pitch plane (PP2), the first pitch plane (PP1) being located at a non-zero distance L from the second pitch plane (PP2) in the direction (200) of disassembly, the end face (57) being located axially between the first pitch plane (PP1) and the second pitch plane (PP2);
    **characterized in that** the end face (57) of the inner rolling bearing ring (36) is located at a distance from the first pitch plane (PP1) that is greater than half of the ball diameter DB1 of the balls (16) of the first row of balls (16) and **in that**:

$$DP1 - \frac{8}{10}DB1 < DCE$$

    and, preferably:

$$DP1 - \frac{6}{10} \cdot DB1 < DCE$$

2. Drive wheel assembly (10) according to claim 1, **characterized in that**

$$DCE < DP2 - 2.DB2$$

and, preferably:

$$DCE < DP1$$

3. Drive wheel assembly (10) according to any one of the preceding claims, **characterized in that**

- the end face (57) of the inner rolling bearing ring (36) is closer to the second pitch plane (PP2) than the first pitch plane (PP1); and/or
- the end face (57) of the inner rolling bearing ring (36) is located at a distance from the second pitch plane (PP2) that is less than half of the ball diameter DB2 of the balls (18) of the second row of balls (18).

4. Drive wheel assembly (10) according to any one of the preceding claims, **characterized in that:**

$$L \geq \frac{DP2 - DP1}{2}$$

and/or

$$L \leq \frac{7}{5} \times \frac{DB1 + DB2}{2}$$

and/or

$$\sqrt{4 * L^2 + (DP2 - DP1)^2} - (DB1 + DB2) \geq \frac{2}{3} \times DB1$$

5. Drive wheel assembly (10) according to any one of the preceding claims, **characterized in that:**

$$\frac{DB1 + DB2}{2} \leq L$$

6. Drive wheel assembly (10) according to any one of the preceding claims, **characterized in that:**

- the annular contact interface (61) between the inner rolling bearing ring (36) and the transmission bowl (32) is located at least partially, and preferably entirely, on one side of the second pitch plane (PP2) opposite the first pitch plane (PP1); and/or
- in orthogonal projection onto the axis of rotation (100), at least part of the annular contact interface (61) between the inner rolling bearing ring (36) and the transmission bowl (32) is positioned at a distance from the bearing interface (87) between the inner rolling bearing ring (36) and the shoulder (86) that is less than the ball diameter DB2 of the balls of the second row of balls (18) and/or
- in orthogonal projection onto the axis of rotation (100), at least part of the annular contact interface (61) between the inner rolling bearing ring (36) and the transmission bowl (32) is positioned at a distance from the bearing interface (87) between the inner rolling bearing ring (36) and the shoulder (86) that is greater than the ball diameter DB2 of the balls of the second row of balls (18) and/or
- at least part of the annular contact interface (61) between the inner rolling bearing ring (36) and the transmission bowl (32) is located at a distance from the second pitch plane (PP2) that is greater than half of the ball diameter DB2 of the balls (18) of the second row of balls (18); and/or

- in orthogonal projection onto the first pitch plane (PP1), at least part of the annular contact interface (61) between the inner rolling bearing ring (36) and the transmission bowl (32) is superimposed with at least part of the bearing interface (87) between the end face (57) of the inner rolling bearing ring (36) and the shoulder (86); and/or

- in orthogonal projection onto the first pitch plane (PP1), at least part of the annular contact interface (61) between the inner rolling bearing ring (36) and the transmission bowl (32) is located between the second inner raceway (62) and the outer circumference of the bearing interface (87) between the end face (57) of the inner rolling bearing ring (36) and the shoulder (86); and/or

- in orthogonal projection onto the first pitch plane (PP1), the annular contact interface (61) between the inner rolling bearing ring (36) and the transmission bowl (32) and the second inner raceway (62) are separate.

- in orthogonal projection onto the first pitch plane (PP1), the annular contact interface (61) between the inner rolling bearing ring (36) and the transmission bowl (32) and the second inner raceway (62) are at a distance from each other that is greater than half of the ball diameter DB2.

7. Drive wheel assembly (10) according to any one of the preceding claims, **characterized in that** the transmission bowl (32) has a cylindrical bearing surface (462) fitted into a cylindrical bore (49) of the wheel hub (30), and located at least partially between the first pitch plane (PP1) and the second pitch plane (PP2), and preferably having an intersection with a plane perpendicular to the axis of rotation (100) and tangent to the shoulder (86).

8. Drive wheel assembly (10) according to any one of the preceding claims, **characterized in that:**

- the shrink-fit bearing surface (52) of the wheel hub (30) extends at least partially between the first pitch plane (PP1) and the second pitch plane (PP2); and/or
- the shrink-fit bearing surface (52) of the wheel hub (30) extends partially from one side of the second pitch plane (PP2) opposite the first pitch plane (PP1); and/or
- the shrink-fit bearing surface (52) of the wheel hub has a diameter DF such that:

$$DF < DP1 - \frac{10}{14} \cdot DB1$$

and/or
- the shrink-fit bearing surface (52) of the wheel hub has a diameter DF such that:

$$DP1 - \frac{6}{5}DB1 < DF$$

9. Drive wheel assembly (10) according to any one of the preceding claims, **characterized in that** the bearing interface (87) between the bearing face (57) and the shoulder (86) is flat.

10. Drive wheel assembly (10) according to any one of the preceding claims, **characterized in that**

- the wheel hub (30) is a solid one-piece part, which is preferably metallic or bi-material; or
- the wheel hub (30) comprises at least one solid one-piece part forming the flange (38) and the shrink-fit bearing surface (52), and an additional inner rolling bearing ring which is shrink-fitted onto the solid part, which forms the first inner raceway (56) and the shoulder (86).

11. Drive wheel assembly (10) according to any one of the preceding claims, **characterized in that** the first inner raceway (56) is enveloping in the axial direction.

12. Drive wheel assembly (10) according to any one of the preceding claims, **characterized in that** DB1>DB2.

13. Drive wheel assembly (10) according to any one of the preceding claims, **characterized in that** the first row of balls (16) is rotatably guided by a cage (70) constituting an elastically deformable open ring.

14. Method for mounting a drive wheel assembly according to any one of the preceding claims, **characterized in that** before the shrink-fitting of the inner rolling bearing ring (36) onto the wheel hub (30), a bearing cage (70) constituting an elastically deformable open ring is positioned facing the first inner raceway (56), by moving apart the bearing cage (70) when passing the shoulder (86) of the movable sub-assembly, and the balls (16) of the first row of balls (16) are positioned in cavities of the bearing cage (70), either before positioning the bearing cage (70), or after positioning the bearing cage (70).

# Fig.1

# Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3052104
- WO 2021148676 A
- WO 2022161734 A